# EUROPEAN PATENT APPLICATION

(11) **EP 4 618 211 A1**
(43) Date of publication of application: **17.09.2025**
(21) Application number: 25160151.4
(22) Date of filing: 26.02.2025
(51) Int. Cl.: H01M 10/04, H01M 10/0585

(54) **PRESSING APPARATUS FOR SECONDARY BATTERIES, SECONDARY BATTERY MANUFACTURED USING THE SAME, AND METHOD OF MANUFACTURING THE SAME**

(30) Priority: 06.03.2024 KR 20240031685
(71) Applicant: SAMSUNG SDI CO., LTD., Yongin-si, Gyeonggi-do 17084 (KR)
(72) Inventor: Jang, Han Byeol, Yongin-si, Gyeonggi-do 17084 (KR); Choi, Jong Woo, Yongin-si, Gyeonggi-do 17084 (KR); Jeong, Tae Su, Yongin-si, Gyeonggi-do 17084 (KR); Oh, Eun Seok, Yongin-si, Gyeonggi-do 17084 (KR)
(74) Representative: Michalski Hüttermann & Partner Patentanwälte mbB

(57) **Abstract**

A pressing apparatus for secondary batteries includes a gripper configured to fix an electrode assembly into a fixed electrode assembly, and to transfer the fixed electrode assembly, the fixed electrode assembly including a stack of a positive electrode, a negative electrode, and a separator, a first heat plate including a first upper heat plate and a first lower heat plate spaced apart from each other, the first upper heat plate and the first lower heat plate being configured to heat and press the fixed electrode assembly, and a second heat plate protruding from the first heat plate, the second heat plate including a second upper heat plate and a second lower heat plate configured to fix the fixed electrode assembly, and the second upper heat plate and the second lower heat plate being retractable into the first heat plate during heating and pressing of the fixed electrode assembly.

## Description

### BACKGROUND

### 1. Field

Embodiments relate to a pressing apparatus for secondary batteries, a secondary battery manufactured using the same, and a method of manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

A secondary battery generally may be classified into cylindrical, prismatic, and pouch types according to their external shapes. For example, the pouch-shaped battery may be manufactured by winding or stacking a positive electrode, a negative electrode, and a separator constituting an electrode assembly.

The above information disclosed in this Background section is for enhancement of understanding of the background of the present disclosure, and therefore, it may contain information that does not constitute related (or prior) art.

### SUMMARY

A pressing apparatus for secondary batteries according to an embodiment of the present disclosure includes a gripper configured to fix an electrode assembly into a fixed electrode assembly, and to transfer the fixed electrode assembly, the fixed electrode assembly including a stack of a positive electrode, a negative electrode, and a separator, a first heat plate including a first upper heat plate and a first lower heat plate spaced apart from each other, the first upper heat plate and the first lower heat plate being moveable and configured to heat and press the fixed electrode assembly, and a second heat plate protruding from the first heat plate, the second heat plate including a second upper heat plate and a second lower heat plate configured to fix the fixed electrode assembly, and the second upper heat plate and the second lower heat plate being retractable into the first heat plate during heating and pressing of the fixed electrode assembly.

The gripper may include at least one pair of fixing portions, and the second heat plate includes a pair of long sides and a pair of short sides connected to the pair of long sides, the pair of long sides of the second heat plate extending lengthwise in parallel to the pair of fixing portions of the gripper and being configured to intersect major surfaces of the fixed electrode assembly.

The gripper may be configured to fix the electrode assembly across the major surfaces of the electrode assembly, to be inserted with the fixed electrode assembly between the first upper heat plate and the first lower heat plate of the first heat plate, and to separate from the fixed electrode assembly.

The second heat plate may protrude from the first heat plate, the at least one pair of fixing portions of the gripper is spaced apart from the second heat plate and is interposed between the first upper heat plate and the first lower heat plate of the first heat plate.

When the second heat plate protrudes from the first heat plate, a minimum distance between the at least one pair of fixing portions of the gripper and the second heat plate may be at least 1 mm.

A length of each of the pair of short sides of the second heat plate may be 0.2 times to 0.4 times a length of each of long sides of the electrode assembly.

A length of each of the pair of long sides of the second heat plate may be longer than a length of each of the at least one pair of fixing portions of the gripper, the length of each of the pair of long sides of the second heat plate being at least 1.1 times a length of each of short sides of the electrode assembly.

The second heat plate may protrude between the first upper heat plate and the first lower heat plate of the first heat plate and is retractable into the first heat plate if at least one of the first upper heat plate and the first lower heat plate is pressed.

Each of the second upper heat plate and the second lower heat plate of the second heat plate may include at least two second heat sub-plates.

The gripper may include at least one pair of fixing portions, and when the second heat plate protrudes from the first heat plate, the pair of fixing portions may be interposed between the at least two second heat sub-plates.

Each of the first heat plate and the second heat plate may be configured to have a pressing pressure of 5 kgf/cm² to 40 kgf/cm².

Each of the first heat plate and the second heat plate may be configured to have a pressing temperature of 60° C to 110 °C.

Each of the first heat plate and the second heat plate may be configured to have a pressing time of 10 seconds to 100 seconds.

A pressing pressure of the second heat plate may be lower than a pressing pressure of the first heat plate.

A secondary battery may be manufactured using the pressing apparatus.

The secondary battery may have a pressure mark corresponding to a pressing position of the second heat plate.

A secondary battery manufacturing method using a pressing apparatus for secondary batteries according to an embodiment of the present disclosure includes fixing, by a gripper, an electrode assembly, such that the electrode assembly includes a fixed stack of a positive electrode, a negative electrode, and a separator, transferring, by the gripper, the fixed stack of the electrode assembly to a position between a first lower heat plate and a first upper heat plate of a first heat plate, allowing a second heat plate, which includes a second upper heat plate and a second lower heat plate, to protrude from the first upper heat plate and the first lower heat plate, respectively, such that the electrode assembly is pressed by the second heat plate, separating the gripper from the electrode assembly, retracting the second heat plate into the first heat plate, and heating and pressing the electrode assembly through the first heat plate.

The electrode assembly may include a pair of long sides and a pair of short sides connected to the long sides, electrode tabs of the electrode assembly being provided at at least one of the pair of long sides, and the second heat plate may include a pair of long sides and a pair of short sides connected to the long sides, the second heat plate fixing the electrode assembly across the pair of long sides of the electrode assembly so as to intersect the electrode assembly, and the second heat plate pressing the electrode assembly in a state of avoiding the electrode tabs.

The heating and pressing the electrode assembly through the first heat plate may be performed after the gripper is separated from the electrode assembly.

The second heat plate may press the electrode assembly across a pair of long sides of the electrode assembly, a width of the second heat plate across the pair of long sides of the electrode assembly being 1/4 to 1/3 of a length of each the long sides of the electrode assembly.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a view schematically showing the operating process of a pressing apparatus for secondary batteries according to an embodiment of the present disclosure;
FIGS. 2A-2E and 3A-3D are perspective views and sectional views of a pressing apparatus for secondary batteries according to the embodiment of the present disclosure during various stages of the operating process of FIG. 1;
FIG. 4 is a view showing an example of a secondary battery manufactured using the pressing apparatus for secondary batteries according to the embodiment of the present disclosure;
FIGS. 5A-5C and 6A-6B are perspective views and sectional views of a pressing apparatus for secondary batteries according to another embodiment of the present disclosure; and
FIGS. 7A-7B are views of a pressing apparatus for secondary batteries according to a further embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1. 0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The case of the rechargeable battery may be configured in various shapes, e.g., a cylindrical shape or a prismatic shape. The case may be made of metal, e.g., aluminum, an aluminum alloy, nickel-plated steel, a laminated film constituting a pouch, or plastic.

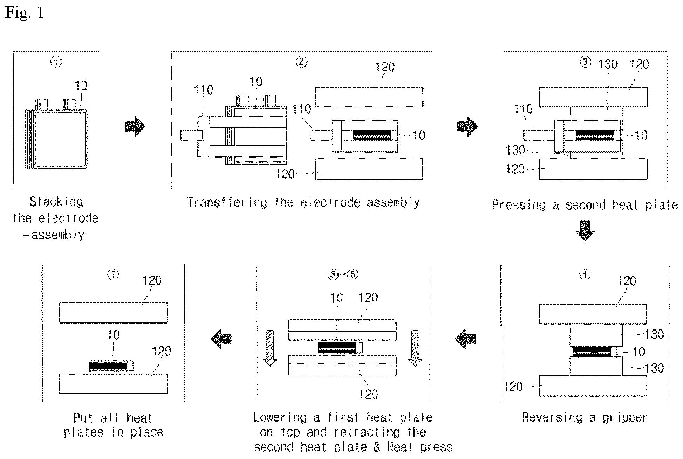

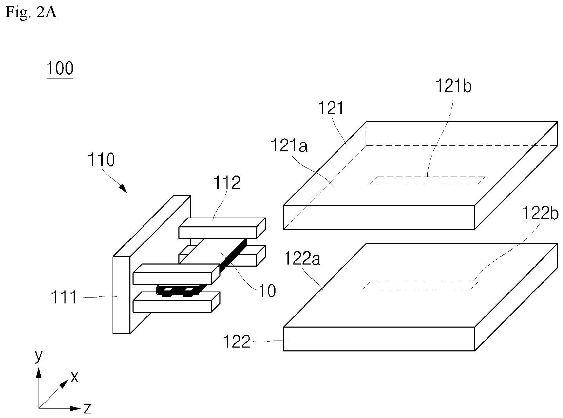

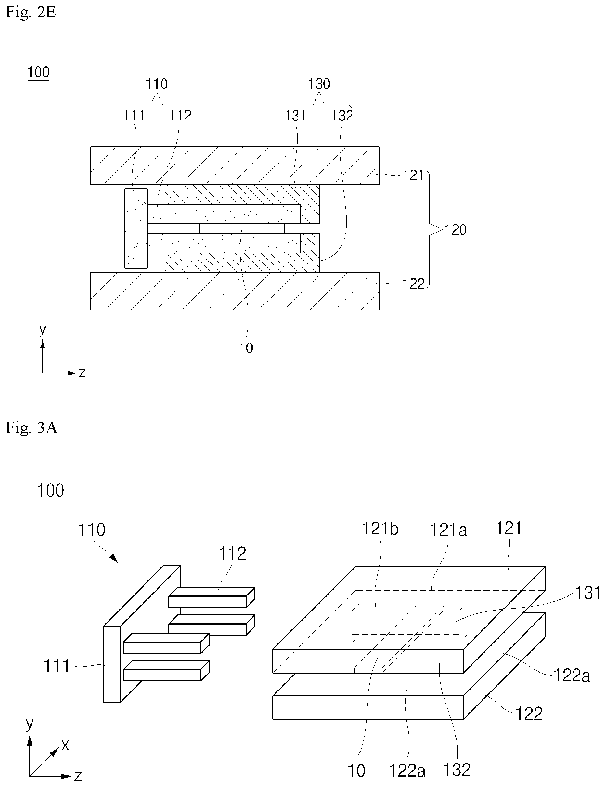

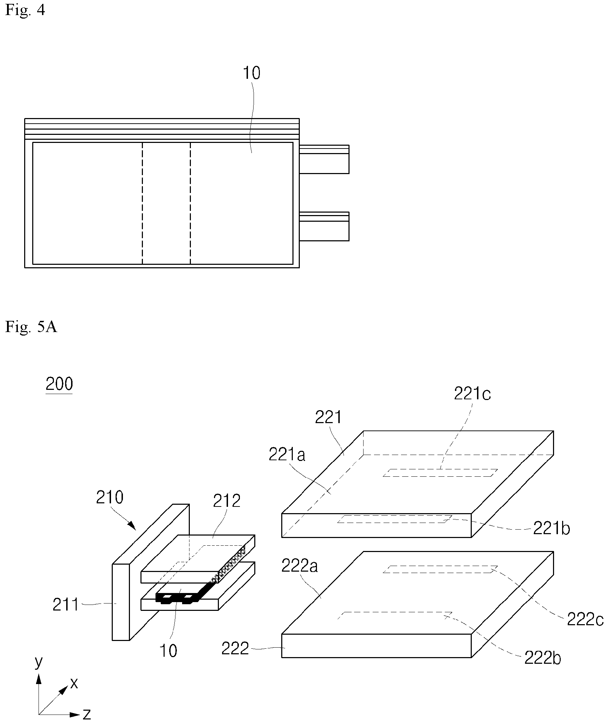

FIG. 1 is a view schematically showing the operating process of a pressing apparatus for secondary batteries according to an embodiment of the present disclosure. FIGS. 2A-2E and 3A-3D are respectively a perspective view and a sectional view of the pressing apparatus for secondary batteries according to the embodiment of the present disclosure. FIG. 4 is a view showing an example of a secondary battery manufactured using the pressing apparatus for secondary batteries according to the embodiment of the present disclosure.

Referring to FIGS. 1, 2A-2E, 3A-3D, and 4, a pressing apparatus 100 for secondary batteries according to the embodiment of the present disclosure may be an apparatus for fixing the entire area of an electrode assembly 10 while holding the electrode assembly 10 so as to prevent misalignment of components constituting the electrode assembly 10 during a process of producing the electrode assembly 10. If electrode plates, such as a positive electrode plate and a negative electrode plate, are provided independently in the electrode assembly 10, the electrode plates may be potentially misaligned during transfer to the next process. Therefore, the pressing apparatus 100 for secondary batteries, according to the embodiment of the present disclosure, may apply heat and pressure as uniformly as possible to the entire area of the electrode assembly 10 while holding the electrode assembly 10 to fix (e.g., adhere or attach) the electrode plates and a separator to each other.

The electrode assembly 10, which may be applied to prismatic and pouch-shaped secondary batteries, may be formed by winding or stacking a stack of a first electrode plate, a separator, and a second electrode plate, each of which may be formed as a thin sheet or a thin membrane. The electrode assembly 10 may be a stacked assembly. The electrode assembly 10 may be a Z-stack electrode assembly, in which a positive electrode plate and a negative electrode plate are inserted on both sides of a separator bent into a Z-stack. The electrode assembly 10 may also be a wound assembly. If the electrode assembly 10 is a wound stack, the winding axis may be parallel to a longitudinal direction of a case. In other embodiments, the shape of the electrode assembly 10 is not limited in the present disclosure. In addition, one or more electrode assemblies 10 may be stacked such that long sides of the electrode assemblies 10 are adjacent to each other and accommodated in the case, and the number of electrode assemblies 10 in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

For example, the electrode assembly 10 may have a prismatic shape formed by a pair of long sides and a pair of short sides connected to the long sides. **In** another example, the electrode assembly may have rounded edges or may be schematically hexahedral in shape. The shape of the electrode assembly 10 may refer to the shape of an imaginary surface that wraps the entirety of the electrode assembly 10 in which the electrode plates are stacked.

For example, a first electrode tab and a second electrode tab may be provided at at least one of the pair of short sides of the electrode assembly 10. In another example, the first electrode tab and the second electrode tab may be located on one surface in the same direction. In yet another example, the first electrode tab may be located at a side surface of a left end of the electrode assembly 10, and the second electrode tab may be located at a side surface of a right end of the electrode assembly 10. Herein, "left" and "right" may refer to a pair of short sides, which are for convenience of description, and the positions may change if the electrode assembly 10 is rotated left and right or up and down.

The first electrode tab of the first electrode plate and the second electrode tab of the second electrode plate may be located at at least one of the two ends of the electrode assembly 10. In some examples, the electrode assembly 10 may be received in the case together with an electrolyte. In the electrode assembly 10, a first current collector and a second current collector may be welded and connected respectively to the first electrode tab of the first electrode plate and the second electrode tab of the second electrode plate exposed on at least one of both ends.

Referring to FIG. 1, the pressing apparatus for secondary batteries may include a gripper 110, a first heat plate 120, and a second heat plate 130.

The gripper 110 may fix an electrode assembly 10, in which a positive electrode, a negative electrode, and a separator are stacked, and may transfer the fixed electrode assembly 10 (i.e., a fixed stack of the electrode assembly 10) to a position for a pressing process. The gripper 110 may be extendable and retractable, allowing electrode assemblies 10 of various thicknesses to be fixed or separated.

The first heat plate 120 may include a pair of upper and lower plates, and may be located above and under the electrode assembly 10 to heat and press the electrode assembly 10. The first heat plate 120 may include a first upper heat plate 121 and a first lower heat plate 122 (FIG. 2A), e.g., the first upper heat plate 121 and the first lower heat plate 122 may face each other and may be spaced apart from each other in the y-axis direction to define a space for the gripper 110 therebetween. In an embodiment, the first upper heat plate 121 and the first lower heat plate 122 may be movable.

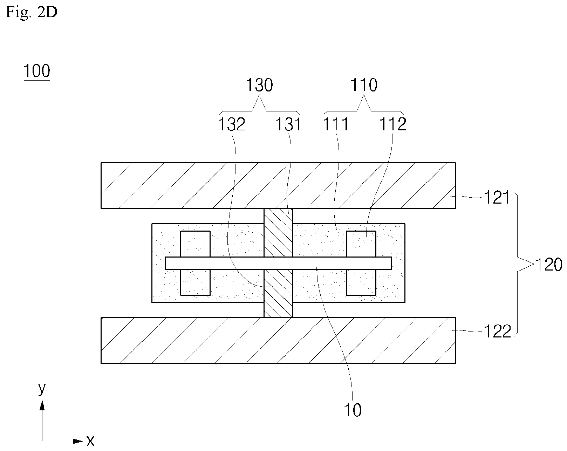

The second heat plate 130 may include a pair of upper and lower plates, and may protrude from at least one side of the first heat plate 120 to fix the electrode assembly 10 above and below. The second heat plate 130 may include a second upper heat plate 131 and a second lower heat plate 132 (FIG. 2D). The second upper heat plate 131 may protrude from one side of the first upper heat plate 121, and the second lower heat plate 132 may protrude from one side of the first lower heat plate 122. In some examples, each of the second upper heat plate 131 and the second lower heat plate 132 may protrude from the surfaces of the first upper heat plate 121 and the first lower heat plate 122 facing each other toward the electrode assembly 10.

The pressing process of the pressing apparatus 100 for secondary batteries will be described with reference to FIG. 1. FIG. 1 is a view schematically showing operations ① through ⑥ of the pressing apparatus 100 for secondary batteries according to an embodiment of the present disclosure.

First, a plurality of electrodes and a separator interposed therebetween may be stacked to form the electrode assembly 10 (operation ① in FIG. 1). Subsequently, the electrode assembly 10, in which the positive electrode, the negative electrode, and the separator are stacked, may be fixed using the gripper 110, and may be transferred to a position for a pressing process (operation ② in FIG. 1). In some examples, the electrode assembly 10 may be picked up and fixed using the gripper 110, and may be introduced between the first upper and lower heat plates of the first heat plate 120. Subsequently, the second heat plate 130, constituted by the pair of second upper and lower heat plates, may protrude from at least one side of the first heat plate 120, constituted by the pair of first upper and lower heat plates, to press and/or fix the electrode assembly 10 (operation ③ in FIG. 1). The operation of the pressing apparatus 100 for secondary batteries in operations ② and ③ of FIG. 1 will be described in more detail below with reference to FIGS. 2A to 2E.

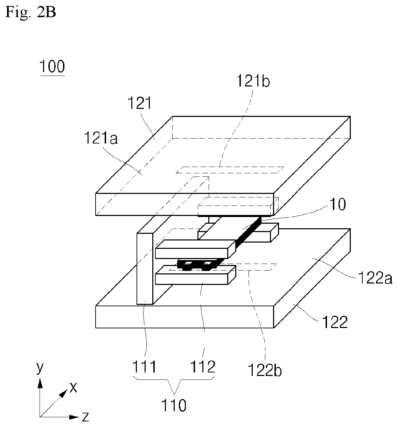

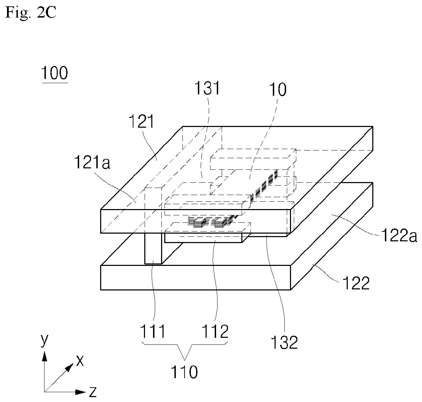

FIG. 2A is a perspective view showing the state in which the gripper 110 holds the electrode assembly 10 to fix the electrode assembly 10, and FIG. 2B is a perspective view showing the state in which the gripper 110 is interposed between the first upper and lower heat plates of the first heat plate 120. FIG. 2C is a perspective view showing the state in which the second heat plate 130 protrudes from the first heat plate 120 as the first upper heat plate 121 is moved downward to fix the electrode assembly 10. FIG. 2D is a right side view of FIG. 2C, and FIG. 2E is a front view of FIG. 2C.

Referring to FIG. 2A, the gripper 110 may fix the electrode assembly 10 across the pair of long sides of the electrode assembly 10 (e.g., a portion of the gripper 110 may extend in a z-axis direction across the pair of long sides of the electrode assembly 10 to secure the electrode assembly 10 in a stationary position). In an embodiment, the gripper 110 may fix the electrode assembly 10 across the major surfaces of the electrode assembly 10. The gripper 110 may include a main body 111 and a fixing portion 112, wherein the gripper 110 may hold and fix the electrode assembly 10 through the fixing portion 112. For example, the fixing portion 112 may be moveable relative to the main body 111 (e.g., vertically in the y-axis direction and/or horizontally in the z-axis direction) to be extendable and retractable, and to allow different thicknesses of one electrode assembly 10 or multiple electrode assemblies 10.

In some examples, a longitudinal direction of the electrode assembly 10 may be disposed so as to be parallel to the longitudinal direction of the main body 111 (e.g., in the x-axis direction). In some examples, the electrode assembly 10 may be fixed at the top and bottom in a stacking direction (e.g., in a y-axis direction) by the fixing portion 112 protruding from the main body 111 in a protruding direction (e.g., in the z-axis direction). The fixing portion 112 may include a pair of upper and lower fixing portions to hold the electrode assembly 10 at the top and bottom. In some examples, at least one pair of fixing portions 112 may be formed.

Referring to FIG. 2B, the gripper 110 may be interposed between the first upper and lower heat plates of the first heat plate 120. For example, the entirety of the gripper 110 may be inserted between the first upper and lower heat plates of the first heat plate 120, such that the main body 111 with the fixing portion 112 securing the electrode assembly 10 may be positioned between the first upper and lower heat plates of the first heat plate 120.

Referring to FIGS. 2C-2E, the gripper 110 may be interposed between the first upper and lower heat plates of the first heat plate 120, and the second heat plate 130 may protrude from the first heat plate 120 toward the electrode assembly 10 to fix the electrode assembly 10. The fixing portion 112 of the gripper 110 may be formed at the main body 111 so as to avoid the position of the second heat plate 130 (e.g., the gripper 110 may be inserted between the first upper and lower heat plates of the first heat plate 120 such that the fixing portion 112 of the gripper 110 may not overlap the second heat plate 130 in the y-axis direction of FIG. 2C).

For example, if the second heat plate 130 protrudes from the first heat plate 120, a minimum distance (e.g., a minimum horizontal distance along the x-axis direction) between the fixing portion 112 of the gripper 110 and the second heat plate 130 may be at least 1 mm. This may prevent interference and collision between the second heat plate 130 and the fixing portion 112 and may account for the movement tolerance of a facility (e.g., machinery or apparatus) that operates the gripper 110.

For example, the second heat plate 130 may be moveable (e.g., extendable and retractable) along a direction extending between the first upper and lower heat plates of the first heat plate 120 (e.g., along the y-axis direction). For example, the second heat plate 130 may protrude from the first heat plate 120 toward the electrode assembly 10 to press and fix the electrode assembly 10 in order to secure the electrode assembly 10 at a stationary (e.g., immovable) state, and may subsequently be retracted between the first upper and lower heat plates of the first heat plate 120 if at least one of the first upper and lower heat plates of the first heat plate 120 is pressed.

The first heat plate 120 may have a heating portion formed at the surface thereof facing the electrode assembly 10 to press and heat the electrode assembly 10. A first upper heating portion 121a may be formed at a lower surface (in FIG. 2A) of the first upper heat plate 121, and a first lower heating portion 122a may be formed at an upper surface (in FIG. 2A) of the first lower heat plate 122. An upper opening 121b, through which the second upper heat plate 131 may protrude and be retracted, may be formed in the lower surface (in FIG. 2A) of the first upper heat plate 121. A lower opening 122b, through which the second lower heat plate 132 may protrude and be retracted, may be formed in the upper surface (in FIG. 2A) of the first lower heat plate 122.

FIGS. 2A and 2B show the state in which the second upper heat plate 131 and the second lower heat plate 132 are retracted between the first upper heat plate 121 and the first lower heat plate 122. FIGS. 2C to 2E show the state in which the second upper heat plate 131 and the second lower heat plate 132 protrude from the first upper heat plate 121 and the first lower heat plate 122 (e.g., the second upper and lower heat plates 131 and 132 may protrude toward each other along the y-axis direction to secure the gripper 110 with the electrode assembly 10 therebetween).

The second heat plate 130 may have a pair of long sides and a pair of short sides connected to the long sides, and may fix the electrode assembly 10 across the pair of long sides of the electrode assembly 10 (e.g., the pair of long sides of each of the second upper and lower heat plates 131 and 132 may extend in the z-axis direction) so as to intersect the electrode assembly 10 (e.g., to intersect or overlap the major surfaces of the electrode assembly 10 in the y-axis direction). Because the electrode tabs of the electrode assembly 10 are formed at the short sides of the electrode assembly 10, interference between the electrode tabs and the second heat plate 130 (which overlap the major surfaces of the electrode assembly 10) may be easily avoided.

Referring to FIGS. 2D and 2E, in some examples, in order to avoid interference if the fixing portion 112 of the gripper 110 is interposed between the first upper and lower heat plates of the first heat plate 120, the second heat plate 130 may be formed at positions spaced apart therefrom. The second heat plate 130 may be designed so as to have an area (e.g., a surface area facing the gripper 110 and contacting the electrode assembly 10) that can sufficiently fix the electrode assembly 10. The length of the pair of long sides(e.g., in the z-axis direction) and the length of the pair of short sides (e.g., in the x-axis direction) of the second heat plate 130 may be designed taking into account the shape of the electrode assembly 10 and the gripper 110.

For example, as described above, the minimum distance (e.g., in the x-axis direction) between the fixing portion 112 of the gripper 110 interposed between the first upper and lower heat plates of the first heat plate 120 and the second heat plate 130 may be at least 1 mm. The length (e.g., in the x-axis direction) of the short side of the second heat plate 130 may be 0.2 times to 0.4 times the length (e.g., in the x-axis direction) of the long side of the electrode assembly 10. The length (e.g., in the z-axis direction) of the long side of the second heat plate 130 may be 1.1 times or more the length (e.g., in the z-axis direction) of the short side of the electrode assembly 10. For example, the second heat plate 130 may press the electrode assembly 10 across the pair of long sides (e.g., which extend in the x-axis direction) of the electrode assembly 10, and may press 1/4 to 1/3 of the length of the long side of the electrode assembly 10 from the center of each of the pair of long sides (e.g., in the x-axis direction) of the electrode assembly 10 to fix the electrode assembly 10 (e.g., so a width of the second heat plate 130 across the electrode assembly 10 in the x-axis direction may be 1/4 to 1/3 of the length of the long side of the electrode assembly 10 in the x-axis direction and may be centered on the long side of the electrode assembly 10 in the x-axis direction ).

Referring back to FIG. 1, the gripper 110 may then be separated from the electrode assembly 10 (operation ④ in FIG. 1). At this time, the second heat plate 130, which protrudes and fixes the electrode assembly 10, may be retracted into the first heat plate 120 (operation ⑤ in FIG. 1), and the entire area of the electrode assembly 10 may be (e.g., simultaneously) heated and pressed by the first heat plate 120 ( operation ⑥ in FIG. 1). In some examples, the first upper heat plate 121 may be moved downward in a direction of pressing the electrode assembly 10 in the state in which the first lower heat plate 122 is fixed. The operation of the pressing apparatus 100 for secondary batteries in operations ④ to ⑥ will be described in more detail below with reference to FIGS. 3A to 3D.

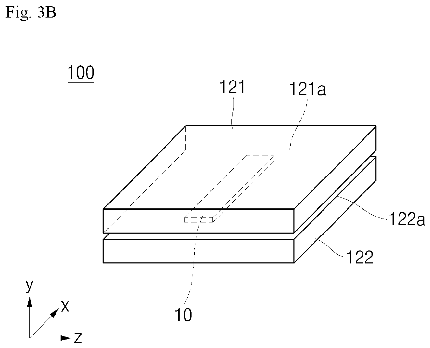

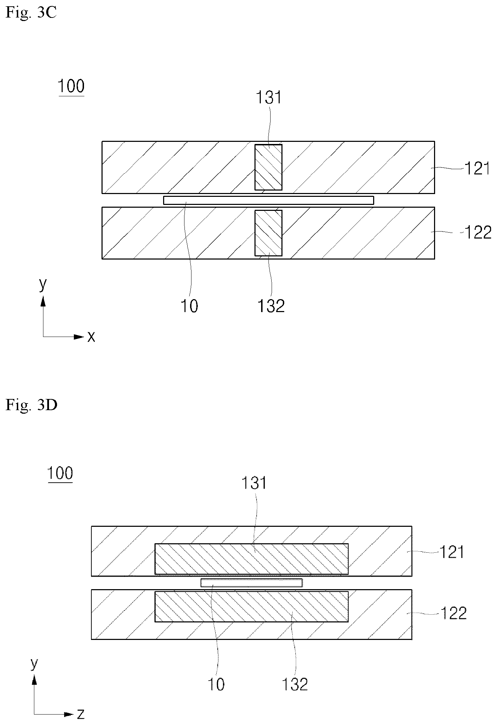

FIG. 3A is a perspective view showing the state in which the gripper 110 is separated from the electrode assembly 10, and FIG. 3B is a perspective view showing the state in which the second heat plate 130 is retracted in the first heat plate 120. FIG. 3C is a right side view of FIG. 3B, and FIG. 3D is a front view of FIG. 3B.

Referring to FIG. 3A, in some examples, if the electrode assembly 10 is located between the first upper and lower heat plates of the first heat plate 120 and the electrode assembly 10 is fixed by the second heat plate 130, the gripper 110 may be separated from the electrode assembly 10. The first heat plate 120 may heat and press the electrode assembly 10 after the gripper 110 is separated from the electrode assembly 10.

Referring to FIGS. 3B-3D, at this time, the second heat plate 130 may be retracted into the first heat plate 120 during the heating and pressing of the electrode assembly 10. Consequently, the pressing apparatus 100 for secondary batteries may apply heat and pressure as uniformly as possible to the entire area of the electrode assembly 10 while holding the electrode assembly 10 to fix (e.g., adhere or attach) the electrode plates and the separator to each other.

In some examples, the pressing temperature of each of the first heat plate 120 and the second heat plate 130 may be 60 °C to 110 °C. The pressing time of each of the first heat plate 120 and the second heat plate 130 may be 10 seconds to 100 seconds. The pressing pressure of each of the first heat plate 120 and the second heat plate 130 may be 5 kgf/cm² to 40 kgf/cm². Heat and pressure may prevent clogging of the separator.

For example, the pressing pressure of the second heat plate 130 may be lower than the pressing pressure of the first heat plate 120. A heating surface may be formed on a pressing surface of the second heat plate 130.

In some examples, after pressing and heating of the electrode assembly 10, the first heat plate 120 may be moved to the original position thereof to complete the pressing process of the electrode assembly 10 (operation ⑦ in FIG. 1). FIG. 4 shows the electrode assembly 10 after pressing and heating are completed.

Referring to FIG. 4, wrinkles may potentially occur at the pressed and heated position of the electrode assembly 10. This may be because the second heat plate 130 holds the full width of the electrode assembly 10 (e.g., along the z-axis direction in FIG. 3D), which may mean that pressure marks may be potentially formed at the edges where the second heat plate 130 and the electrode assembly 10 are in contact with each other (e.g., dashed lines in FIG. 4).

If the length of the long side of the second heat plate 130 (e.g., in the z-axis direction in FIG. 3D) is longer than the width of the electrode assembly 10 (e.g., in the z-axis direction in FIG. 3D), as shown in FIG. 2E, the second heat plate 130 may extend beyond the width of the electrode assembly 10 (e.g., not all edges of the second heat plate 130 may be in contact with the electrode assembly 10), thereby improving quality. For example, referring to FIG. 2E, the second heat plate 130 may extend beyond the gripper 110 (i.e., beyond the fixing portions 112) in the z-axis direction. In an embodiment, the length of each of the pair of long sides of the second heat plate 130 may be longer than a length of each of the fixing portions 112.

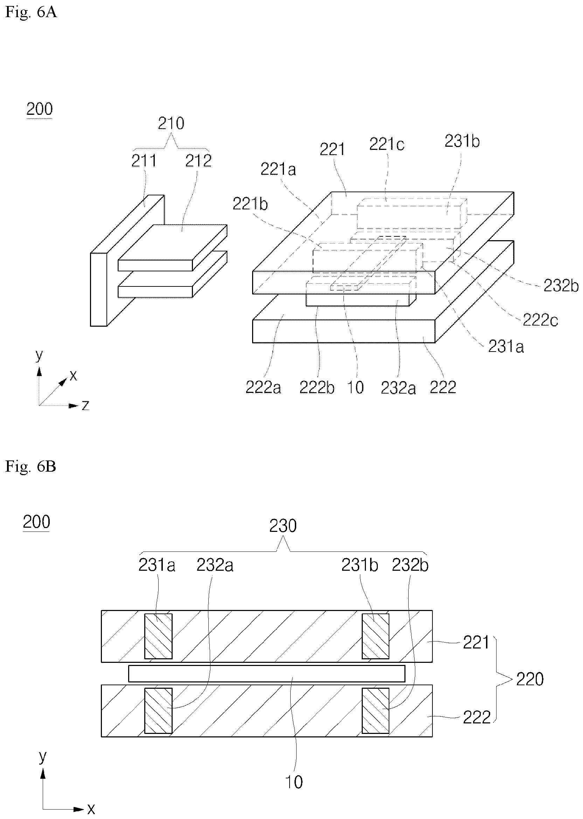

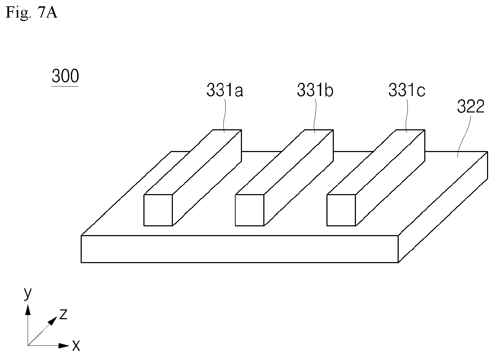

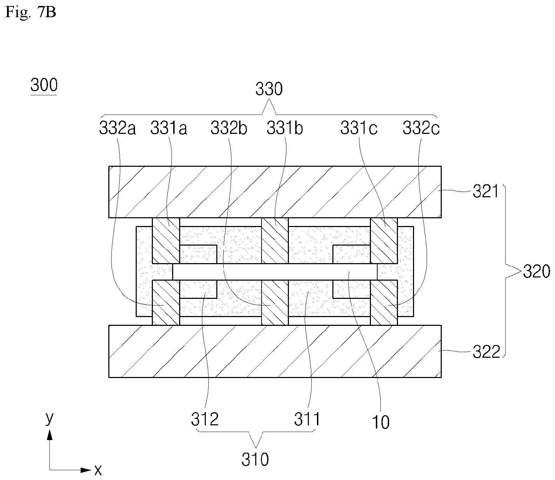

FIGS. 5A-5C and 6A-6B are perspective views and sectional views of a pressing apparatus 200 for secondary batteries configured to fix an electrode assembly at two positions according to another embodiment of the present disclosure. FIGS. 7A and 7B illustrate a perspective view and a sectional view of a pressing apparatus 300 for secondary batteries configured to fix an electrode assembly at three positions according to a further embodiment of the present disclosure.

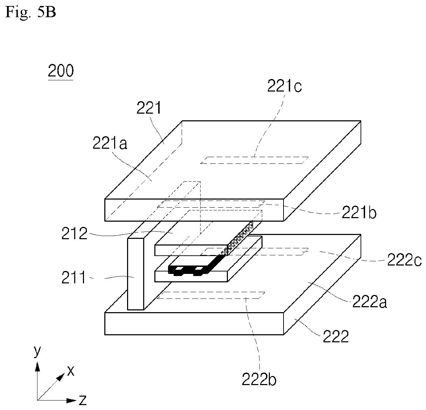

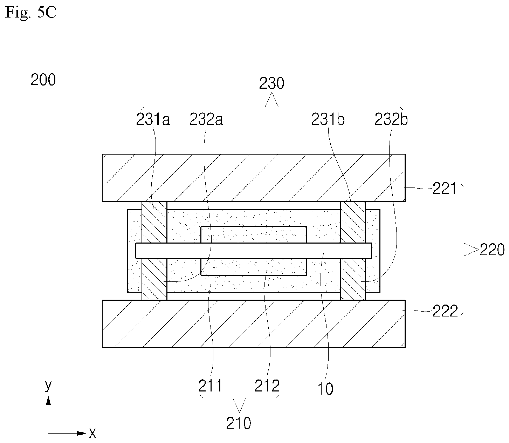

FIG. 5A is a perspective view showing the state in which a gripper 210 holds and fixes an electrode assembly 10, and FIG. 5B is a perspective view showing the state in which the gripper 210 is interposed between upper and lower plates of a first heat plate 220. FIG. 5C is a right side view showing the state in which a second heat plate 230 protrudes from the first heat plate 220 as a first upper heat plate 221 is moved downward to fix the electrode assembly 10. FIG. 6A is a perspective view showing the state in which the gripper 210 is separated from the electrode assembly 10, and FIG. 6B is a right side view showing the state in which the second heat plate 230 is retracted in the first heat plate 220.

Referring to FIGS. 5A-5C and6A-6B, in some examples, each of the upper and lower plates of the first heat plate 220 may include two second heat plates 230. The first heat plate 220 may include a first upper heat plate 221 and a first lower heat plate 222. The first upper heat plate 221 may have a first upper heating portion 221a formed at a lower surface thereof (in FIG. 5A), and the first lower heat plate 222 may have a first lower heating portion 222a formed at an upper surface thereof (in FIG. 5A). Two upper openings 221b and 221c, through which a first upper heat sub-plate 231a and a second upper heat sub-plate 231b may protrude and be retracted, may be formed in the lower surface (in FIG. 5A) of the first upper heat plate 221. Two lower openings 222b and 222c, through which a first lower heat sub-plate 232a and a second lower heat sub-plate 232b may protrude and be retracted, may be formed in the upper surface (in FIG. 5A) of the first lower heat plate 222.

The first and second upper heat sub-plates 231a and 231b and the first and second lower heat sub-plates 232a and 232b may be disposed spaced apart from each other by a distance less than the length of a long side of the electrode assembly 10 (e.g., in the x-axis direction in FIG. 5C). Consequently, the heat plates may fix the electrode assembly 10 on both ends.

The gripper 210 may include a main body 211 and at least one pair of fixing portions 212 protruding from the main body 211. In some examples, referring to FIG. 5C, the pair of fixing portions 212 may be formed so as to be interposed between the two second heat plates 230 protruding from the first heat plate 220. The width (e.g., in the x-axis direction) of the fixing portion 212 may be formed so as to correspond to a length that facilitates fixing of the electrode assembly 10, and may be formed such that the fixing portion 212 is spaced apart from the second heat plate 230 by at least 1 mm. The gripper 210 may have a single fixing portion 212 in order to avoid the two second upper heat plates 231a, 231b and the two second lower heat plates 232a, 232b located at both ends thereof.

FIGS. 7A and 7B show a pressing apparatus 300 for secondary batteries configured to fix an electrode assembly 10 at three positions. FIG. 7A shows a first lower heat plate 322, and FIG. 7B shows the state in which a gripper 310, which holds and fixes the electrode assembly 10, is interposed between upper and lower plates of a first heat plate 320, and a second heat plate 330 protrudes to fix the electrode assembly 10.

Referring to FIGS. 7A and 7B, a first upper heat plate 321 may be formed such that a first upper heat sub-plate 331a, a second upper heat sub-plate 331b, and a third upper heat sub-plate 331c may protrude and be retracted. The first lower heat plate 322 may be formed such that a first lower heat sub-plate 332a, a second lower heat sub-plate 332b, and a third lower heat sub-plate 332c may protrude and be retracted.

In some examples, if three or more sub-plates constitute the second heat plate 330, as described above, the length between two sub-plates disposed at the outermost sides may be less than the length of the long side of the electrode assembly 10. The length between the first and third upper heat sub-plate 231a and 231c may be less than the length of the long side (e.g., in the x-axis direction in FIG. 7B) of the electrode assembly 10. The second upper heat sub-plate 331b may be disposed between the first and third upper heat sub-plate 231a and 231c. Consequently, the electrode assembly 10 may be fixed at both ends and at other positions.

A main body 311 and a fixing portion 312 of the gripper 310 may have the same configuration as that of the main body and the fixing portion of the griper in the embodiment having only one second heat plate 130. However, the present disclosure is not limited thereto, and the main body and the fixing portion may be formed so as to avoid interference with the second heat plate 330.

In some examples, the pressing surfaces of the plurality of second heat plates 230 and 330 may have the same area or different areas. The protruding lengths of the plurality of second heat plates 230 and 330 may be equal to each other, and the distances between adjacent ones of the plurality of second heat plates 230 and 330 may be equal to each other.

The electrode assembly may include a pair of long sides and a pair of short sides connected to the long sides, and electrode tabs may be provided at at least one of the pair of long sides. The second heat plate may include a pair of long sides and a pair of short sides connected to the long sides, and may fix the electrode assembly across the pair of long sides of the electrode assembly so as to intersect the electrode assembly, but may press the electrode assembly in a state of avoiding the electrode tabs. Because electrode tab interference may cause hazards (e.g., tab folding), the second heat plate may fix the electrode assembly across between the electrode tabs provided on the long side of the electrode assembly. The gripper may also be formed to avoid the electrode tabs and may be interposed between the first heat plates.

By way of summation and review, in a Z-stack method, a notched positive electrode sheet, a notched negative electrode sheet, and a separator may be stacked in a Z-stack manner, wherein the electrode sheets may be provided in an independent state and thus may move, whereby the electrode sheets may be misaligned during a subsequent process. Therefore, it is desirable to fix a stacked assembly in a state of holding the same.

In contrast, embodiments provide a pressing apparatus for secondary batteries capable of applying heat and pressure as uniformly as possible to the entire area of an electrode assembly while holding the electrode assembly to improve fixation between electrode plates and a separator, a secondary battery manufactured using the same, and a method of manufacturing the same. That is, as is apparent from the above description, according to embodiments of the present disclosure, electrode plates and a separator may be fixed to each other by applying heat and pressure as uniformly as possible to the entire area of an electrode assembly while holding the electrode assembly, and therefore it is possible to prevent misalignment of the electrode plates in the electrode assembly, thereby improving product completeness.

These and other aspects and features of the present disclosure will be described in or will be apparent from the following description of embodiments of the present disclosure.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from scope of the present invention as set forth in the following claims.

## Claims

1. A pressing apparatus (100, 200) for secondary batteries, the pressing apparatus (100, 200) comprising:
a gripper (110, 210) configured to fix an electrode assembly (10) into a fixed electrode assembly (10), and to transfer the fixed electrode assembly (10), the fixed electrode assembly (10) including a stack of a positive electrode, a negative electrode, and a separator;
a first heat plate (120, 220) including a first upper heat plate (121, 221) and a first lower heat plate (122, 222) spaced apart from each other, the first upper heat plate (121, 221) and the first lower heat plate (122, 222) being moveable and configured to heat and press the fixed electrode assembly (10); and
a second heat plate (130, 230) including a second upper heat plate (131, 231) and a second lower heat plate (132, 232) configured to fix the fixed electrode assembly (10), wherein the pressing apparatus (100, 200) is configured such that in an extendible state the second heat plate (130, 230) protrudes from the first heat plate, and such that the second upper heat plate (131, 231) and the second lower heat plate (132, 232) are retractable into the first heat plate (120, 220) during heating and pressing of the fixed electrode assembly (10).

2. The pressing apparatus (100, 200) as claimed in claim 1, wherein:
the gripper (110, 210) includes at least one pair of fixing portions (112, 212), and
the second heat plate (130, 230) includes a pair of long sides and a pair of short sides connected to the pair of long sides, the pair of long sides of the second heat plate (130, 230) extending lengthwise in parallel to the pair of fixing portions (112, 212) of the gripper (110, 210) and being configured to intersect major surfaces of the fixed electrode assembly (10).

3. The pressing apparatus (100, 200) as claimed in claim 2, wherein the gripper (110, 210) is configured to fix the electrode assembly (10) across the major surfaces of the electrode assembly (10), to be inserted with the fixed electrode assembly (10) between the first upper heat plate (121, 221) and the first lower heat plate (122, 222) of the first heat plate (120, 220), and to separate from the fixed electrode assembly (10).

4. The pressing apparatus (100, 200) according to any of claims 2 or 3, wherein, in the state when the second heat plate (130, 230) protrudes from the first heat plate (120, 220), a) the at least one pair of fixing portions (112, 212) of the gripper (110, 210) is spaced apart from the second heat plate (130, 230) and is interposed between the first upper heat plate (121, 221) and the first lower heat plate (122, 222) of the first heat plate (120, 220); and/or b) a minimum distance between the at least one pair of fixing portions (112, 212) of the gripper (110, 210) and the second heat plate (130, 230) is at least 1 mm.

5. The pressing apparatus (100, 200) according to any of claims 2 to 4, wherein a length of each of the pair of short sides of the second heat plate (130, 230) is 0.2 times to 0.4 times a length of each of long sides of the electrode assembly (10); and/or wherein a length of each of the pair of long sides of the second heat plate (130, 230) is longer than a length of each of the at least one pair of fixing portions (112, 212) of the gripper (110, 210), the length of each of the pair of long sides of the second heat plate (130, 230) being at least 1.1 times a length of each of the short sides of the electrode assembly (10).

6. The pressing apparatus (100, 200) according to any of the previous claims, wherein in the state when the second heat plate (130, 230) protrudes from the first heat plate (120, 220) the second heat plate (130, 230) protrudes between the first upper heat plate (121, 221) and the first lower heat plate (122, 222) of the first heat plate (120, 220) and wherein the pressing apparatus (100, 200) is configured such that the second heat plate (130, 230) is retractable into the first heat plate (120, 220) if at least one of the first upper heat plate (121, 221) and the first lower heat plate (122, 222) is pressed.

7. The pressing apparatus (200) according to any of the previous claims, wherein each of the second upper heat plate (231) and the second lower heat plate (232) of the second heat plate (230) includes at least two second heat sub-plates (231a, 231b, 232a, 232b), wherein the gripper (210) includes at least one pair of fixing portions (212), and
in the state when the second heat plate (230) protrudes from the first heat plate (220), the pair of fixing portions (212) is interposed between the at least two second heat sub-plates (231a, 231b, 232a, 232b).

8. The pressing apparatus (100, 200) according to any of the previous claims, wherein each of the first heat plate (120, 220) and the second heat plate (130, 230) is configured to have a pressing pressure of 5 kgf/cm² to 40 kgf/cm²; and/or wherein each of the first heat plate (120, 220) and the second heat plate (130, 230) is configured to have a pressing temperature of 60 °C to 110 °C; and/or wherein a pressing pressure of the second heat plate (130, 230) is lower than a pressing pressure of the first heat plate (120, 220).

9. A secondary battery manufacturing method, the method comprising:
fixing, by a gripper (110, 210), an electrode assembly (10), such that the electrode assembly (10) includes a fixed stack of a positive electrode, a negative electrode, and a separator;
transferring, by the gripper (110, 210), the fixed stack of the electrode assembly (10) to a position between a first lower heat plate (122, 222) and a first upper heat plate (121, 221) of a first heat plate (120, 220);
allowing a second heat plate (130, 230), which includes a second upper heat plate (131, 231) and a second lower heat plate (132, 232), to protrude from the first upper heat plate (121, 221) and the first lower heat plate (122, 222), respectively, such that the electrode assembly (10) is pressed by the second heat plate (130, 230);
separating the gripper (110, 210) from the electrode assembly (10);
retracting the second heat plate (130, 230) into the first heat plate (120, 220); and
heating and pressing the electrode assembly (10) through the first heat plate (120, 220).

10. The method as claimed in claim 9, wherein:
the electrode assembly (10) includes a pair of long sides and a pair of short sides connected to the pair of long sides, electrode tabs of the electrode assembly being provided at at least one of the pair of long sides, and
the second heat plate (130, 230) includes a pair of long sides and a pair of short sides connected to the pair of long sides of the second heat plate, the second heat plate (130, 230) fixing the electrode assembly (10) across the pair of long sides of the electrode assembly (10) so as to intersect the electrode assembly (10), and the second heat plate (130, 230) pressing the electrode assembly (10) in a state of avoiding the electrode tabs.

11. The method according to any of claims 9 or 10, wherein the heating and pressing the electrode assembly (10) through the first heat plate (120, 220) is performed after the gripper (110, 210) is separated from the electrode assembly (10).

12. The method according to any of claims 9 to 11, wherein the second heat plate (130, 230) presses the electrode assembly (10) across a pair of long sides of the electrode assembly (10), a width of the second heat plate (130, 230) across the pair of long sides of the electrode assembly (10) being 1/4 to 1/3 of a length of each of the long sides of the electrode assembly (10).

13. The method according to any of claims 9 to 12, wherein the step of heating and pressing the electrode assembly (10) through the first heat plate (120, 220) is performed with a pressing time of 10 seconds to 100 seconds.

14. The method according to any of claims 10 to 13, wherein the step of pressing the electrode assembly (10) in a state of avoiding the electrode tabs through the second heat plate (130, 230) is performed with a pressing time of 10 seconds to 100 seconds.

15. A secondary battery manufactured using the pressing apparatus (100, 200) as claimed in any of claims 1 to 8 and/or manufactured by the method according to any of claims 9 to 14, and preferably wherein the secondary battery has a pressure mark corresponding to a pressing position of the second heat plate (130, 230).
